Europäisches Patentamt

European Patent Office

Office européen des brevets

(19)

(11) Veröffentlichungsnummer: **0 027 500**
**B1**

(12) **EUROPÄISCHE PATENTSCHRIFT**

(45) Veröffentlichungstag der Patentschrift: **16.11.83**

(21) Anmeldenummer: **80104176.5**

(22) Anmeldetag: **17.07.80**

(51) Int. Cl.³: **C 08 L 23/28,** A 61 J 1/00
//(C08L23/28, 33/08, 33/10, 55/02)

(54) Thermoplastische Masse, medizinische Geräte daraus und Verfahren zu deren Herstellung.

(30) Priorität: 24.07.79 DE 2929959

(43) Veröffentlichungstag der Anmeldung:
29.04.81 Patentblatt 81/17

(45) Bekanntmachung des Hinweises auf die Patenterteilung:
16.11.83 Patentblatt 83/46

(84) Benannte Vertragsstaaten:
AT BE CH DE FR GB IT LI LU NL SE

(56) Entgegenhaltungen:
AT - B - 238 448
CH - A - 480 378
DE - A - 2 748 198

(73) Patentinhaber: HOECHST AKTIENGESELLSCHAFT
Postfach 80 03 20
D-6230 Frankfurt am Main 80 (DE)

(72) Erfinder: Mücke, Rainer, Dr.
Kanalstrasse 3
D-8261 Burgkirchen/Alz (DE)
Erfinder: Schiller, Johann
Mittling 25 1/6
D-8262 Neuötting (DE)
Erfinder: Säckl, Herbert
Max-Halbe-Strasse 5
D-8261 Unterau (DE)
Erfinder: Weiss, Ernst, Dr.
Beckstrasse 35
D-8262 Altötting (DE)

Courier Press, Leamington Spa, England.

# 0 027 500

## Thermoplastische Masse, medizinische Geräte daraus und Verfahren zu deren Herstellung

Die Erfindung betrifft eine thermoplastische Kunststoffmasse, insbesondere für die Herstellung von transparenten und flexiblen Artikeln, die mit parenteralen Flüssigkeiten in Berührung kommen.

Es ist bekannt, Formmassen aus weichmacherhaltigem Polyvinylchlorid (PVC) für die Herstellung von transparenten, flexiblen Artikeln, wie Behältern, Beuteln und Schläuchen, zur Aufnahme von parenteralen Flüssigkeiten, beispielsweise Blut, Blutersatzstoffen, Infusionslösungen, medizinischen Lösungen und anderen physiologischen Flüssigkeiten, zu verwenden.

Die Vorteile dieser Formmassen aus Weich—PVC sind die relativ hohe Fesigkeit und Transparenz der daraus hergestellten Artikel sowie die Sterilisationsbeständigkeit auch bei höheren Temperaturen und gute Hochfrequenzverschweißbarkeit.

Nachteile sind die Weichmachermigration, die auch bei Einsatz von Polymerweichmachern durch die Hydrolyse bei der Sterilisiertemperatur von 120°C gegeben ist, sowie die relativ hohe Wasserdampfdurchlässigkeit, die beispielsweise bei längerer Lagerung von wäßrigen Flüssigkeiten in solchen Behältern zu Verdampfungsverlusten führt.

In dem deutschen Gebrauchsmuster 77 33 140 werden medizinische Geräte für parenteral zu verwendende Flüssigkeiten beschrieben, die aus einer thermoplastischen Masse aus 50 bis 95 Gew.-Teilen chloriertem Polyolefin und 5 bis 50 Gew.-Teilen Polymeren von Acryl- und/oder Methacrylsäureestern bestehen.

Die aus diesen Formmassen hergestellten Artikel besitzen zwar eine niedrige Wasserdampfdurchlässigkeit, gute Verschweißbarkeit, hohe Festigkeit und Flexibilität, und sie enthalten auch keine nennenswerten Mengen an extrahierbaren oder hydrolysierbaren Stoffen. Sie lassen jedoch insbesondere hinsichtlich der Transparenz zu wünschen übrig. Es hat sich ferner gezeigt, daß bei der Sterilisierung solcher Artikel Trübung auftreten kann, die erst nach längerer Lagerung und dann auch nur teilweise verschwindet. Auch läßt die Verarbeitbarkeit dieser bekannten thermoplastischen Massen, insbesondere beim Kalandrieren und Extrudieren zu wünschen übrig.

Aufgabe der Erfindung ist es daher, eine thermoplastische Masse zu schaffen, welche die obengenannten Nachteile nicht aufweist, die also insbesonders eine niedrige Wasserdampfdurchlässigkeit, gute Verschweißbarkeit, hohe Festigkeit und Flexibilität besitzt, und praktisch keine hydrolysierbaren und extrahierbaren Stoffe enthält und darüberhinaus auch noch eine hohe Transparenz, die auch bei erhöhten Temperaturen nicht verlorengeht, und eine gute Verarbeitbarkeit auf den üblichen Verarbeitungsmaschinen für thermoplastische Massen, wie Extrudern und Kalandern, aufweist.

Diese Aufgabe wird erfindungsgemäß gelöst durch eine thermoplastische Masse, bestehend aus
a) 60 bis 95 Gew.-% von mindestens einem chlorierten Polyethylen, Polypropylen oder Mischpolymerisat aus Ethylen und Propylen mit einem mittleren Molekulargewicht von 30 000 bis 300 000 und mit einem Chlorgehalt von 20 bis 45 Gew.-%, und
b) 5 bis 40 Gew.-% von mindestens einem Copolymerisat aus 30 bis 60 Gew.-% Butadien, 20 bis 40 Gew.-% Styrol und 15 bis 40 Gew.-% Ester der Acryl- oder Methacrylsäure.

Die erfindungsgemäße Formmasse besteht vorzugsweise aus 75 bis 90 Gew.-% der Komponente a, und 10 bis 25 Gew.-% der Komponente b.

Besonders geeignet als Komponente a, ist chloriertes Niederdruckpolyethylen.

Der Chlorgehalt der Komponente a, beträgt 20 bis 45, vorzugsweise 25 bis 40 Gew.-%. Das mittlere Molekulargewicht liegt bei 30 000 bis 300 000, vorzugsweise bei 40 000 bis 100 000 (berechnet aus dem Chlorgehalt und dem gelchromatographisch bestimmten Molekulargewicht des Ausgangspolyethylene; vgl. Weßlau, Makromolekulare Chemie, Band 26, Jahrgang 1958, Seiten 96 bis 101).

Als Copolymerisate aus Butadien, Styrol und einem Acryl- oder Methacrylsäureester werden bevorzugt solche eingesetzt, die aus 35 bis 45 Gew.-% Butadien, 25 bis 35 Gew.-% Styrol und 17 bis 25 Gew.-% Ester der Acryl- oder Methacrylsäure bestehen (Gewichtsprozent jeweils bezogen auf Copolymerisat).

Die Ester der Acryl- und Methacrylsäure enthalten als Alkoholkomponente in der Regel einen gesättigt-aliphatischen, geradkettigen oder verzweigten Alkohol mit 1 bis 6, vorzugsweise mit 1 bis 4 C-Atomen. Geeignete Ester sind beispielsweise Methylacrylat, Ethylacrylat, Isopropylacrylat, Butylacrylat, Hexylacrylat und die entsprechenden Methacrylate. Die Ester der Methacrylsäure sind bevorzugt. Besonders bevorzugt ist Methylmethacrylat.

Die erfindungsgemäß zu verwendenden Copolymerisate aus Butadien, Styrol und einem Ester der Acryl- oder Methacrylsäure können weitere Monomere, vorzugsweise Acrylnitril oder Methacrylnitril, in geringen Mengen, vorzugsweise in Mengen von 1 bis 7 Gew.-% (bezogen auf Copolymerisat), enthalten.

Die erfindungsgemäß einzusetzenden chlorierten Polyolefine und Copolymerisate sind bekannt und im Handel erhältlich.

Um die Verarbeitbarkeit der erfindungsgemäßen thermoplastischen Massen beispielsweise auf Kalandern und Extrudern zu erleichtern, können ihnen Verarbeitungshilfstoffe, Wärmestabilisatoren, Gleitmittel und andere zweckmäßige Additive einverleibt werden. Außerdem können beispielsweise Lichtstabilisatoren, Antistatika und gegebenenfalls Pigmente zugesetzt werden.

2

Als Verarbeitungshilfsstoffe (processing aids) werden vorzugsweise Polymethylmethacrylat in einer Menge bis zu 10 Gew.-%, vorzugsweise von 0,5 bis 5 Gew.-%, bezogen auf chloriertes Polyolefin, eingesetzt; bevorzugt sind Polymethylmethacrylate mit einer relativen Viskosität von 0,5 bis 7, vorzugsweise von 1 bis 3 (gemessen an einer 1 gew.-%igen Lösung in Chloroform mittels des Ubbelohde-Viskosimeters mit der Kapillare Oa). Zur Verbesserung der Antiblockeigenschaften wird vorzugsweise ein Polyolefin eingesetzt. Dieses Polyolefin kann mit dem zur Herstellung des chloriertes Polyolefins verwendeten Ausgangs-Polyolefin identisch sein, es kann aber auch ein anderes Polyolefin sein. Bevorzugt eingesetzt werden Polyethylen, Polypropylen, Mischpolymerisate aus Ethylen und Propylen oder Mischungen aus diesen Polymeren. Dabei beträgt die Menge bis zu 10 Gew.-%, vorzugsweise 0,5 bis 5 Gew.-%, bezogen auf chloriertes Polyolefin.

Als Wärmestabilisatoren, die auch physiologisch einwandfrei sind, seien beispielsweise genannt: Fettsäuresalze von Calcium, Magnesium, Aluminium und Zink; organische Phosphite; aliphatische Epoxide; epoxidiertes Sojabohnenöl; mehrwertige Alkohole; Harnstoff und Phenylharnstoff, gegebenenfalls gemeinsam mit phenolischen Antioxidatien. Die Stabilisatoren werden in der Regel in einer Menge von 0,1 bis 3 Gew.-%, bezogen auf chloriertes Polyolefin, eingesetzt.

Als Gleitmittel, die auch physiologisch einwandfrei sind, seien beispielsweise genannt: Montansäureester (Montanwachs), niedermolekulare Polyethylenwachse und Amidwachs. Die Gleitmittel werden in der Regel in einer Menge von 0,1 bis 2 Gew.-%, bezogen auf chloriertes Polyolefin, eingesetzt.

Die Herstellung der erfindungsgemäßen thermoplastischen Massen erfolgt einfach durch Zusammenmischen der einzelnen Komponenten, beispielsweise in einem in der Kunststoffverarbeitung üblichen Schnellmischer.

Die erfindungsgemäßen thermoplastischen Formmassen können auf üblich Verarbeitungsmaschinen, vorzugsweise auf Kalandern zu Folien oder auf Extrudern zu Folien oder Schläuchen verarbeitet werden. Aus den Folien, die in der Regel eine Dicke von 50 bis 1000 $\mu$m, vorzugsweise von 200 bis 600 $\mu$m besitzen, können mit Hilfe der üblichen Fertigungsmaschinen die gewünschten Artikel, wie Becher, Behälter, Beutel und dergleichen, hergestellt werden.

Die erfindungsgemäßen Formmassen zeichnen sich durch eine Reihe von Vorteilen aus. Vor allem lassen sie sich ohne Schwierigkeiten und mit hoher Durchsatzgeschwindigkeit auf Kalandern und Extrudern verarbeiten. Die erhaltenen Formkörper, vorzugsweise Folien und Schläuche, erfüllen die aufgabengemäß gesetzten Ziele voll und ganz. Sie weisen insbesonders eine hohe Transparenz auf, die auch bei höheren Sterilisierungstemperaturen erhalten bleibt.

Im folgenden wird die Erfindung an Beispielen näher erläutert:

## Beispiel 1

In einem Schnellmischer werden 80 Gew.-Teile eines chlorierten Polyethylens (CPE) mit einem Chlorgehalt von 39 Gew.-%, 20 Gew.-Teile eines Methylmethacrylat-Butadien-Styrol (MBS)-Copolymeren, bestehens aus 33 Gew.-% Methylmethacrylat, 36 Gew.-% Butadien und 31 Gew.-% Styrol, 1 Gew.-%, bezogen auf chloriertes Polyethylen, Calcium-Zink-Stearat und 1 Gew.-%, bezogen auf chloriertes Polyethylen, epoxidiertes Sojabohnenöl, gemischt. Aus dieser Formmasse wird auf einem 4-Walzen-Kalander bei 190 bis 210°C eine 400 $\mu$m dicke Folie kalandriert. Diese Folie zeigt hohe Klarheit (Streuung nur 11%).

## Beispiele 2 bis 4

Beispiel 1 wird unter Verwendung des gleichen Chlorpolyethylens und MBS-Copolymeren in einer Menge von 5, 10 und 30 Gew.-Teilen wiederholt; die Summe von Chlorpolyethylen und MBS-Copolymeren beträgt jeweils 100 Gew.-Teile.

Mit steigendem MBS-Anteil werden die Folien steifer, mit fallendem MBS-Anteil erhöht sich die Verblockungsneigung der Folie. Sehr gute Flexibilität und geringe Blockneigung wird mit einem MBS-Anteil von 20 Gew.-Teilen erreicht (Beispiel 1).

## Beispiel 5

Es wird nach Beispiel 1 verfahren, jedoch wird anstelle von CPE mit 39 Gew.-% Chlorgehalt ein CPE mit 34 Gew.-% Chlor eingesetzt. Die aus diesem Blend hergestellten Folien weisen bei sonst gleichem Eigenschaftsbild etwas höhere Sauerstoffdurchlässigkeit auf.

## Beispiel 6

Beispiel 1 wird wiederholt, jedoch werden zusätzlich 9 Gew.-%, bezogen auf chloriertes Polyethylen, eines Polymethylmethacrylates (als Verarbeitungshilfsmittel) mit der relativen Viskosität von 1,3 (gemessen an einer 1 gew.-%igen Lösung in Chloroform mittels des Ubbelohde-Viskosimeters mit der Kapillare Oa) sowie zur weiteren Verringerung der Blockneigung 6 Gew.-%, bezogen auf chloriertes Polyethylen, des für die Herstellung des CPE verwendeten Ausgangs-Polyethylens zugesetzt.

Die Folie zeigt hohe Klarheit und konnte mit hohen Kalandergeschwindigkeit hergestellt werden.

### Vergleichsbeispiel 1

Es wird eine dem Stand der Technik entsprechende Weich-PVC-Folie aus 70 Gew.-% Polyvinylchlorid und 30 Gew.-% Dioctylphthalat kalandriert. Die Dicke der Folie beträgt 400 $\mu$m.

### Vergleichsbeispiel 2

Es wird eine Folie von 400 $\mu$m aus einem Pfropfcopolymerisat, bestehend aus 81 Gew.-Teilen CPE mit einem Chlorgehalt von 40 Gew.-%, und aus 19 Gew.-Teilen Methylmethacrylat, kalandriert. Die Verarbeitbarkeit des Pfropfcopolymers ist wesentlich schlechter als die der erfindungsgemäßen Formmassen. Die Rekonstitution der Transparenz der Blutbeutel nach dem Autoklavieren (siehe unten) wird im Gegensatz zu den aus den erfindungsgemäßen Formmassen hergestellten Blutbeuteln nur ungenügend erreicht.

### Vergleichsbeispiel 3

Es wird eine Folie von 400 $\mu$m aus einem Blend von 80 Gew.-Teilen CPE und 20 Gew.-Teilen Polymethylmethacrylat (Molekulargewicht 100 000, Brechungsindex $n_d = 1,492$) kalandriert. Diese Folie ist im Gegensatz zu den Folien aus erfindungsgemäßen Formmassen milchig trüb.

Die Folien aus dem Beispiel 1 und dem Vergleichsbeispiel 1 werden in einem Autoklaven bei 120°C sterilisiert und der wäßrige Extrakt gemäß DIN 58 361/4 (Blutbeutelprüfung) geprüft.

Das Ergebnis ist in Tabelle I zusammengefaßt. Es zeigt sich, daß mit Folien aus den erfindungsgemäßen Formmassen die noch zulässigen maximalen Wert bei sämtlichen Prüfungen weit unterschritten werden.

In Tabelle II sind jene Eigenschaften der Folien aus den Beispielen 1 bis 6 (erfindungsgemäß) und aus den Vergleichsbeispielen 1 bis 3 (Stand der Technik) zusammengefaßt, die im Hinblick auf medizinische Artikel und Geräte, die mit parenteralen Flüssigkeiten in Berührung kommen, wesentlich sind.

### TABELLE I

| Blutbeutelprüfung nach DIN 58 361/4 | Höchstzulässige Werte | Beispiel 1 | Vergleichsbeispiel 1 |
|---|---|---|---|
| Aussehen der Prüflösung | klar, farblos | klar, farblos | klar, farblos |
| Verschiebung des pH-Wertes | $\leq$ 10 ml 0,01 n-HCl | 0,0 ml | 0,0 ml |
| Verbrauch bei der Titration/250 ml | $\leq$ 10 ml 0,01 n-NaOH | 0,0 ml | 3 bis 5 ml |
| Eindampfrückstand/250 ml | $\leq$ 12,5 mg | 2,1 mg | 3 bis 10 mg |
| UV-Absorption im Bereich von 230 bis 360 nm | $\leq$ 0,2 | bei 230 nm 0,1 | bei 230 nm 0,1 bis 0,25 |
| Chlorionen/250 ml | $\leq$ 1,0 mg Cl' | Spur | Spur |
| Sulfationen/250 ml | $\leq$ 2,5 mg $SO_4''$ | nicht nachweisbar | nicht nachweisbar |
| Ammoniumionen/250 ml | $\leq$ 0,5 mg $NH_4^+$ | Spur | Spur |
| Schaumbildung | nicht nachweisbar | nicht nachweisbar | nicht nachweisbar |
| Oxidierende Substanzen Verbrauch an 0,01 n-$KMnO_4$-Lösung/250 ml | $\leq$ 25,0 ml | 4,1 ml | 10 bis 20 ml |
| Schwermetalle/250 ml | $\leq$ 0,5 mg $Pb^{++}$ | nicht nachweisbar | nicht nachweisbar |

TABELLE II

| | Zugfestigkeit längs/quer N/mm² (DIN 53455) | Reißdehnung längs/quer % (DIN 53455) | Trübung % | Streuung % (ASTM D 1003) | Trübung nach 10 Tagen Lagerung % | Wasserdampf- durchlässigkeit g/m² 24 h (DIN 53122) | Sauerstoffdurch- lässigkeit cm³/m² 24 h (DIN 53380) |
|---|---|---|---|---|---|---|---|
| **Beispiel** | | | | | | | |
| 1 | 11/12 | 431/425 | 16 | 11 | 21 | 3,0 | 79 |
| 2 | 10/10 | 556/604 | 28 | 15 | 43 | 2,3 | 76 |
| 3 | 11/10 | 493/513 | 26 | 14 | 25 | 4,0 | 123 |
| 4 | 14/14 | 314/369 | 22 | 13 | 24 | 4,2 | 128 |
| 5 | 25/10 | 513/610 | 42 | 13 | 25 | 5,2 | 299 |
| 6 | 14/14 | 358/461 | 22 | 10 | 22 | 4,0 | 138 |
| **Vergleichsbeispiel** | | | | | | | |
| 1 | 23/20 | 310/315 | 11 | 10 | 14 | 6,9 | 324 |
| 2 | 11/16 | 299/312 | 35 | 15 | 42 | 1,4 | 68 |
| 3 | 12/16 | 287/321 | 85 | 55 | 55 | 1,4 | 76 |

# 0 027 500

## Patentansprüche

1. Thermoplastische Masse, dadurch gekennzeichnet, daß sie besteht aus
a) 60 bis 95 Gew.-% von mindestens einem chlorierten Polyethylen, Polypropylen oder Mischpolymerisat aus Ethylen und Propylen mit einem mittleren Molekulargewicht von 30 000 bis 300 000 und mit einem Chlorgehalt von 20 bis 45 Gew.-%, und
b) 5 bis 40 Gew.-% von mindestens einem Copolymerisat aus 30 bis 60 Gew.-% Butadien, 20 bis 40 Gew.-% Styrol und 15 bis 40 Gew.-% Ester der Acryl- oder Methacrylsäure.

2. Thermoplastische Masse nach Anspruch 1, dadurch gekennzeichnet, daß sie von der Komponente
a) 75 bis 90 Gew.-% und von der Komponente
b) 10 bis 25 Gew.-%,
enthält.

3. Thermoplastische Masse nach Anspruch 1 bis 2, dadurch gekennzeichnet, daß das Mittlere Molekulargewicht der Komponente a, 40 000 bis 100 000 und der Chlorgehalt 25 bis 40 Gew.-% beträgt, und das Copolymerisat b, aus
35 bis 45 Gew.-% Butadien,
25 bis 35 Gew.-% Styrol und
17 bis 25 Gew.-% Ester der Acryl- oder Methacrylsäure besteht.

4. Thermoplastische Masse nach Anspruch 1 bis 3, dadurch gekennzeichnet, daß der Ester der Acryl- oder Methacrylsäure als Alkoholkomponente einen gesättigt-aliphatischen, geradkettigen oder verzweigten Alkohol mit 1 bis 6 C-Atomen enthält.

5. Thermoplastische Masse nach Anspruch 1 bis 3, dadurch gekennzeichnet, daß der Ester Methylmethacrylat ist.

6. Thermoplastische Masse nach Anspruch 1 bis 5, dadurch gekennzeichnet, daß sie zusätzlich
c) 0 bis 10 Gew.-%, bezogen auf chloriertes Polyolefin, an Polymethylmethacrylat, und
d) 0 bis 10 Gew.-%, bezogen auf chloriertes Polyolefin, von einem Polyethylen, Polypropylen, Mischpolymerisat aus Ethylen und Propylen oder von Mischungen aus diesen Polymeren, enthält.

7. Thermoplastische Masse nach Anspruch 1 bis 6, dadurch gekennzeichnet, daß sie zusätzlich wirksame Mengen an physiologisch einwandfreien Stabilisatoren und Gleitmitteln enthält.

8. Verfahren zur Herstellung von Artikeln und Geräten, die mit parenteralen Flüssigkeiten in Berührung kommen, dadurch gekennzeichnet, daß thermoplastische Massen nach einem der Ansprüche 1 bis 7 eingesetzt und nach an sich bekannten Methoden geformt werden.

9. Artikel und Geräte, die mit parenteralen Flüssigkeiten in Berührung kommen, insbesondere Beutel und Schläuche, dadurch gekennzeichnet, daß sie aus einer thermoplastischen Masse gemäß den Ansprüchen 1 bis 7 bestehen.


## Claims

1. Thermoplastic composition consisting of
a) 60 to 95 percent by weight of at least one chlorinated polyethylene, polypropylene, or chlorinated copolymer of ethylene and propylene having a mean molecular weight of 30,000 to 300,000 and a chlorine content of from 20 to 45 percent by weight, and
b) 5 to 40 percent by weight of at least one copolymer which consists of 30 to 60 percent by weight of butadiene, 20 to 40 percent by weight of styrene and 15 to 40 percent by weight of the ester of acrylic acid or methacrylic acid.

2. Thermoplastic composition as claimed in claim 1, containing said component a) in an amount of from 75 to 90 percent by weight and said component b) in an amount of from 10 to 25 percent by weight.

3. Thermoplastic composition as claimed in claims 1 and 2, wherein the mean molecular weight of the component a) is 40,000 to 100,000 and the chlorine content is 25 to 40 percent and wherein the component b) consists of 35 to 45 percent of butadiene, 25 to 35 percent of styrene and 17 to 25 percent of the ester of acrylic or methacrylic acid.

4. Thermoplastic composition as claimed in claims 1 to 3, wherein the alcohol moiety of the ester of acrylic acid or methacrylic acid is a saturated aliphatic, linear or branched alcohol having 1 to 6 carbon atoms.

5. Thermoplastic composition as claimed in claims 1 to 3, wherein the ester is methylmethacrylate.

6. Thermoplastic composition as claimed in claims 1 to 5, containing additionally
c) from 0 to 10 percent by weight, calculated on chlorinated polyolefin, of poly(methylmethacrylate) and
d) from 0 to 10% by weight, calculated on chlorinated polyolefin, of polyethylene, polypropylene, a copolymer of ethylene and propylene or a mixture of said polymers.

6

7. Thermoplastic composition as claimed in claims 1 to 6, containing additionally effective amounts of physiologically acceptable stabilizers and lubricants.

8. Process for the manufacture of articles and apparatus coming into contact with parenteral liquids, which comprises using a thermoplastic composition as claimed in any one of claims 1 to 7.

9. Articles and apparatus coming into contact with parenteral liquids, especially bags and flexible tubes, made from a thermoplastic composition as claimed in any one of claims 1 to 7.

**Revendications**

1. Matière thermoplastique caractérisée en ce qu'elle comprend:

a) 60 à 95 pour cent en poids d'un polyéthylène, d'un polypropylène ou d'un copolymère d'éthylène et de propylène chlorés, ou d'un mélange de deux de ces matières ou des trois à la fois, ayant une masse moléculaire moyenne de 30 000 à 300 000 et une teneur en chlore de 20 à 45% en poids, et

b) 5 à 40% en poids d'un ou de plusieurs copolymères formés de 30 à 60% en poids de butadiène, 20 à 40% en poids de styrène et 15 à 40% en poids d'un ester de l'acide acrylique ou méthacrylique.

2. Matière thermoplastique selon la revendication 1, caractérisée en ce qu'elle comprend:

75 à 90% en poids de la composante a), et

10 à 25% en poids de la composante b).

3. Matière thermoplastique selon la revendication 1 ou 2, caractérisée en ce que la masse moléculaire moyenne de la composante a) est de 40 000 à 100 000 et sa teneur en chlore de 25 à 40% en poids, et en ce que le copolymère b) comprend:

35 à 45% en poids de butadiène,

25 à 35% en poids de stryrène, et

17 à 25% en poids d'un ester de l'acide acrylique ou méthacrylique.

4. Matière thermoplastique selon l'une quelconque des revendications 1 à 3, caractérisée en ce que l'ester acrylique ou méthacrylique est un ester d'un alcool aliphatique saturé en $C_1$ à $C_6$, à chaîne droite ou ramifiée.

5. Matière thermoplastique selon l'une quelconque des revendications 1 à 3, caractérisée en ce que l'ester est le méthacrylate de méthyle.

6. Matière thermoplastique selon l'une quelconque des revendications 1 à 5, caractérisée en ce qu'elle contient en outre:

c) 0 à 10%, du poids de la polyoléfine chlorée, d'un polyméthacrylate de méthyle, et

d) 0 à 10%, du poids de la polyoléfine chlorée, d'un polyéthylène, d'un polypropylène, d'un copolymère d'éthylène et de propylène ou d'un mélange de plusieurs de ces polymères.

7. Matière thermoplastique selon l'une quelconque des revendications 1 à 6, caractérisée en ce qu'elle contient en outre des stabilisants et des lubrifiants sans inconvénients physiologiques.

8. Procédé de fabrication d'articles et appareils destinés à être mis en contact avec des liquides parentéraux, procédé caractérisé en ce que l'on fabrique ces articles et appareils avec des matières thermoplastiques selon l'une quelconque des revendications 1 à 7, que l'on met sous la forme voulue par des méthodes en elles-mêmes connues.

9. Articles et appareils destinés à être mis en contact avec des liquides parentéraux, en particulier sachets et tuyaux souples, caractérisés en ce qu'ils sont formés en une matière thermoplastiue selon l'une quelconque des revendications 1 à 7.